# NOUVEAU FASCICULE DE BREVET EUROPEEN

(11) **EP 2 776 234 B2**
(45) Date de publication et mention de la décision concernant l'opposition: **04.11.2020**
(45) Mention de la délivrance du brevet: 20.09.2017
(21) Numéro de dépôt: 12787802.3
(22) Date de dépôt: 23.10.2012
(51) Int. Cl.: B29C 70/48, B29C 70/54

(54) **DISPOSITIF DE MAINTIEN EN PRESSION POUR LA REALISATION DE PIECES COMPOSITES PAR INJECTION DE RESINE ET PROCEDE ASSOCIE**
DRUCKHALTEVORRICHTUNG ZUR HERSTELLUNG VON VERBUNDBAUTEILEN DURCH SPRITZGIESSEN VON HARZ UND ZUGEHÖRIGES VERFAHREN
PRESSURE HOLDING DEVICE FOR PRODUCING COMPOSITE COMPONENTS BY THE INJECTION MOULDING OF RESIN, AND ASSOCIATED METHOD

(30) Priorité: 08.11.2011 US 201161557124 P
(43) Date de publication de la demande: 17.09.2014
(73) Titulaire: Safran Aircraft Engines, 75015 Paris (FR)
(72) Inventeur: MATHON, Richard, New Castle, New Hampshire 03854 (US); PHELIPPEAU, Antoine, Portsmouth, New Hampshire 03801 (US)
(74) Mandataire: Camus, Olivier Jean-Claude
(86) Numéro de dépôt international: PCT/FR2012/052420
(87) Numéro de publication internationale: WO 2013/068666

(56) Documents cités:
- EP-A2- 0 320 302
- WO-A1-96/22871
- US-A- 3 154 618
- US-A- 3 975 479
- US-A- 5 433 915
- US-A1- 2002 046 596
- US-A1- 2011 169 195
- CAMPBELL F C ED - CAMPBELL FLAKE C: "Manufacturing processes for advanced composites, passage", 1 janvier 2004 (2004-01-01), MANUFACTURING PROCESSES FOR ADVANCED COMPOSITES, ELSEVIER ADVANCED TECHNOLOGY, OXFORD, GB, PAGE(S) 331 - 341, XP002565382, ISBN: 978-1-85617-415-2 figure 25

## Description

La présente invention concerne un dispositif de maintien en pression pour la réalisation de pièces composites réalisées par injection RTM (resin transfert molding en langue anglaise) ainsi qu'un procédé de réalisation d'une pièce en matériaux composites par injection RTM.

L'invention est particulièrement applicable au domaine de l'aéronautique.

Le procédé RTM est un procédé connu pour la réalisation de pièces en matériaux composites (fibre-résine) à haut rapport résistance sur masse. De façon classique, le procédé de RTM comporte les opérations fondamentales suivantes :
- préparation d'une préforme de fibres par tissage ;
- disposition de la préforme dans un moule d'injection :
- injection de la résine à l'état liquide ;
- application d'une pression de maintien sur la résine injectée et polymérisation de la pièce par chauffage.

Les résines utilisées sont très fluides de manière à bien pénétrer entre les différentes fibres de la préforme, même lorsqu'elles sont injectées sous une pression réduite. Pendant la polymérisation sous l'effet de la chaleur, la résine injectée passe successivement de l'état liquide à l'état gélifié et enfin à l'état solide.

Afin de garantir des pièces de qualité, sans défaut, et sans porosité, notamment à cause du phénomène de dégazage de la résine pendant la polymérisation, il est nécessaire de maintenir la pression de maintien jusqu'à la polymérisation complète de la pièce.

Dans les systèmes d'injection RTM connu, la mise en pression est assurée par l'injecteur de résine. Il est alors nécessaire de maintenir l'injecteur en place et de maintenir une pression jusqu'au figeage complet de la résine. Ainsi, ces systèmes d'injection RTM ne permettent pas de réaliser de pièces à des cadences élevées, puisque le temps d'immobilisation de l'injecteur est indexé à celui de la polymérisation de la résine. Les temps d'occupation des moyens de production sont alors importants et non compressibles.

De plus, le maintien en place du dispositif d'injection, jusqu'à la polymérisation complète de la pièce, augmente le risque de polymérisation de la résine à l'intérieur du dispositif d'injection et à l'intérieur des canalisations situées entre le dispositif d'injection et le moule, ce qui rend complexe les opérations de nettoyage du dispositif d'injection.

Enfin, lors de l'utilisation d'une étuve comme moyen de chauffage, la résine contenue dans la canalisation comprise entre le dispositif d'injection et le moule peut être amené à polymériser avant la résine contenue dans le moule dont l'épaisseur de résine est plus importante. Ce figeage dans la canalisation ne permet donc plus d'assurer la transmission de la pression de maintien jusque dans le moule, ce qui se traduit par la présence de porosité dans la pièce.

Il a été développé un dispositif de maintien en pression décrit dans la demande de brevet FR1154662 permettant d'éviter la polymérisation de la résine à l'intérieur de l'injecteur pendant la phase de maintien en pression de la préforme. Le document propose d'utiliser une membrane souple, intégrée dans l'outillage d'injection ou positionnée à l'extérieur de l'outillage dans un module spécifique, pour assurer la mise sous pression du système d'injection à la place de l'injecteur.

Toutefois, la solution proposée dans cette demande de brevet nécessite la fabrication d'un outillage spécifique, extérieur à l'outillage d'injection, ou la modification de l'outillage d'injection pour l'intégration du dispositif de maintien en pression. De plus, la solution proposée nécessite des temps de préparation du réseau de canalisation d'injection conséquent, ce qui rend la solution proposée peu économique. Une autre solution est notamment décrite dans la demande de brevet US 2002/046596.

Dans ce contexte, l'invention vise à proposer un dispositif de maintien en pression pour la réalisation de pièces en matériaux composites par injection RTM permettant de réaliser de façon économique et rapide de pièces composites dépourvues de porosités par injection RTM.
A cette fin, l'invention propose un dispositif de maintien en pression pour un système d'injection de résine selon la revendication 1.

Grâce au dispositif selon l'invention, il n'est plus nécessaire d'exercer une pression de maintien dans le système d'injection de résine via l'injecteur. Ainsi, l'injecteur est libéré dès la fin de l'injection ce qui permet d'éviter la polymérisation de la résine à l'intérieur de celui-ci pendant la phase en maintien de pression. Le temps d'occupation de l'injecteur est également réduit ce qui permet d'augmenter la cadence de production pour un même injecteur.

Le dispositif de maintien en pression selon l'invention peut également présenter la caractéristique ci-dessous :
- le diamètre de ladite canalisation de maintien en pression est au moins deux fois plus grande que le diamètre d'une canalisation dudit réseau d'injection de résine.

Selon un mode particulier de l'invention, ledit dispositif de maintien en pression est positionné au niveau de ladite canalisation d'entrée de résine ou au niveau de ladite canalisation de sortie de résine dudit moule d'injection.

Selon un mode particulier de l'invention, le système d'injection comporte un premier dispositif de maintien en pression positionné au niveau de ladite canalisation d'entrée de résine et un deuxième dispositif de maintien en pression positionné au niveau de ladite canalisation de sortie de résine.

Selon un mode particulier de l'invention, ledit dispositif de maintien en pression et/ou ladite canalisation d'entrée de résine et/ou ladite canalisation de sortie de résine sont calorifugés.
L'invention a également pour objet un procédé d'injection de résine par RTM mis en oeuvre au moyen d'un système d'injection selon l'invention caractérisé en ce que ledit procédé comporte les étapes consistant à :
- mettre sous vide ledit réseau d'injection de résine formé au moins par ladite canalisation d'entrée de résine, ladite canalisation de sortie de résine, ladite cavité dudit moule d'injection, via lesdits moyens aptes à réaliser le vide dans le système d'injection ;
- injecter la résine à l'état liquide dans le réseau d'injection au moyen dudit injecteur de manière à atteindre une pression consigne à l'intérieur dudit moule d'injection :
- appliquer une pression de maintien dans le réseau d'injection au moyen dudit dispositif de maintien en pression jusqu'à la polymérisation de ladite résine.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue schématique illustrant un exemple de réalisation d'un système d'injection RTM incorporant des dispositifs de maintien en pression selon l'invention ;
- la figure 2 est une vue schématique d'un exemple de réalisation du dispositif de maintien en pression selon l'invention illustré à la figure 1.

Dans toutes les figures, les éléments communs portent les mêmes numéros de référence sauf précision contraire.

D'une façon générale, les flèches pleines représentent le sens de migration de la résine à l'intérieur du système d'injection 100 et les flèches en pointillées représentent le sens de circulation du gaz.

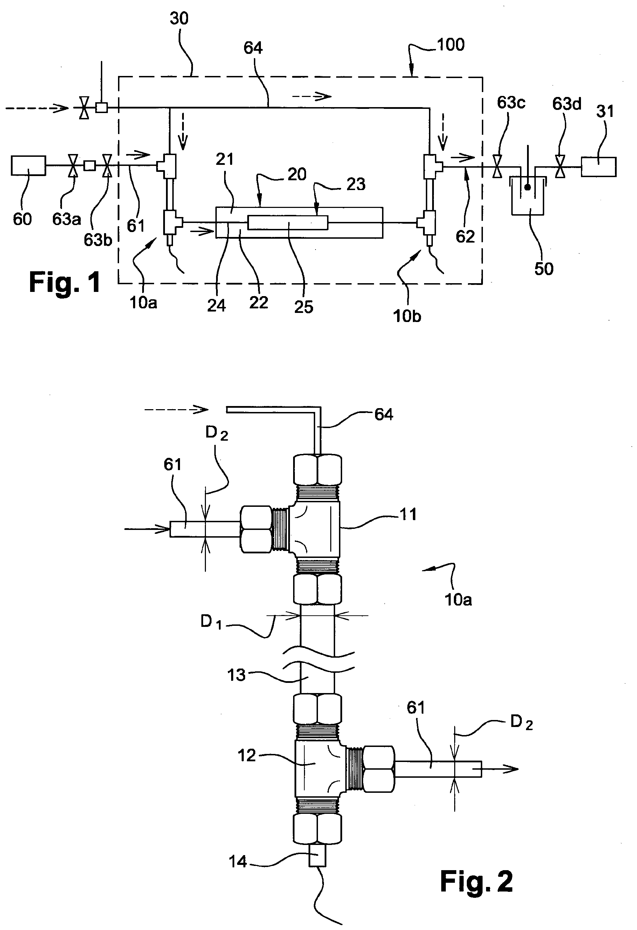

La figure 1 est une vue schématique illustrant un exemple de réalisation d'un système d'injection RTM 100 incorporant deux dispositifs de maintien en pression 10a et 10b selon l'invention.

Le système 100 comporte les éléments classiques permettant de réaliser une pièce en matériaux composites par injection RTM. A cet effet, le système 100 comporte :
- un injecteur 60 de résine ;
- un moule d'injection 20 en deux parties constituées par une partie supérieure 21 et une partie inférieure 22, séparées par une surface de jointure 24 et comportant une cavité 23 à la forme de la pièce à réaliser dans laquelle est inséré une préforme tissée 25 ;
- un piège à résine 50 ;
- une canalisation d'injection 61 reliant l'injecteur 60 au moule d'injection 20 ;
- une canalisation de sortie de résine 62 reliant le moule d'injection 20 au piège à résine 50 ;
- des moyens 31 pour réaliser le vide dans le système d'injection 100 ;
- des vannes d'ouverture/fermeture 63a, 63b, 63c, 63d permettant de contrôler l'ouverture ou la fermeture des différentes canalisations 61, 62 du système 100 ;
- des moyens 30 pour chauffer le moule d'injection 20, telle que par exemple une étuve, ou une presse chauffante (non représentée), de manière à polymériser la résine.

Ainsi, de façon classique, la réalisation d'une pièce en matériaux composites par RTM se décompose en une pluralité d'étapes successives consistant à :
- préparer le moule d'injection 20 par l'application d'un démoulant ;
- préparer une préforme de fibres 25 réalisée préalablement par tissage ;
- mettre en place la préforme tissée 25 dans la cavité 23 du moule d'injection 20 ;
- fermer le moule d'injection 20 et préparer les canalisations d'injection 61 et de sortie de résine 62 ;
- mettre en température le moule d'injection 20 en étuve ou sous presse chauffante :
- mettre sous vide le réseau de canalisation 61, 62 ainsi que la cavité 23 du moule d'injection 20 par les moyens 31 aptes à réaliser le vide dans le système d'injection 100 ;
- injecter la résine à l'état liquide dans la canalisation d'injection 61 au moyen de l'injecteur 60 de sorte que la résine migre dans la canalisation d'injection 61 vers la cavité 23 du moule d'injection 20 puis vers la canalisation de sortie de résine 62 lorsque la cavité 23 est remplie, le surplus de résine injectée étant récupéré dans le piège à résine 50 ; la préforme tissée est alors imprégnée de résine ;
- appliquer une pression de maintien sur la résine injectée à l'issu du remplissage de la cavité 23 jusqu'à la polymérisation de la résine de manière à continuer l'imprégnation de la préforme tissée 25 et à réduire la porosité de la pièce ;
- démouler la pièce réalisée.

Le système d'injection 100 illustré à la figure 1 comporte en outre deux dispositifs de maintien en pression 10a et 10b situés de part et d'autre du moule d'injection 20. Les dispositifs 10a, 10b selon l'invention permettent d'appliquer une pression de maintien sur la résine nécessaire à la réalisation d'une pièce de qualité.

Selon un autre exemple de réalisation (non représenté), le système d'injection peut comporter un unique dispositif de maintien en pression selon l'invention positionné en amont ou en aval du moule d'injection 20. Selon le mode de réalisation illustré à la figure 1, les dispositifs de maintien en pression 10a et 10b sont positionnés respectivement sur la canalisation d'injection 61 en amont du moule d'injection 20 et sur la canalisation de sortie de résine 62 en aval du moule d'injection 20.

Selon le mode de réalisation illustré à la figure 1, les dispositifs de maintien en pression 10a et 10b sont avantageusement placés dans l'étuve 30 et sont situés à proximité du moule d'injection 20 ; toutefois, les dispositifs 10a et 10b peuvent également être placés à l'extérieur des moyens 30 pour chauffer le moule d'injection lorsque les moyens pour chauffer sont formés par une presse chauffante.

Avantageusement, les dispositifs de maintien en pression 10a et 10b sont situés au plus près de l'entrée et de la sortie du moule d'injection 20.

Les dispositifs de maintien en pression 10a et 10b sont également raccordés, au moyen de la canalisation 64, à des moyens aptes à injecter du gaz (avantageusement de l'air ou un gaz neutre) sous pression dans la canalisation 64.

Le dispositif de maintien en pression 10a selon l'invention est illustré de façon plus précise à la figure 2.

Le dispositif de maintien en pression 10a est formé par un premier té de raccord 11 et par un deuxième té de raccord 12, les deux tés étant raccordés par une canalisation 13 adaptée pour être mise sous pression.

Le premier té de raccord 11 du dispositif 10 est raccordé à la partie de la canalisation d'injection 61 reliée à l'injecteur 60 et aux moyens aptes à injecter du gaz sous pression via la canalisation 64.

Le second té de raccord 12 du dispositif 10 est raccordé à la partie de la canalisation d'injection 61 reliée au moule d'injection 20 et comporte un capteur de pression 14 permettant notamment de détecter le démarrage de la polymérisation dans le moule d'injection 20.

Les tés de raccord 11 et 12 sont positionnés dans le système d'injection 100 de manière à ce que l'axe longitudinal de la canalisation 13 reliant les deux tés 11, 12, soit positionné verticalement (i.e. selon un axe parallèle à la direction de la gravité). Lors de la mise sous pression du réseau d'injection (i.e. l'ensemble formé par la canalisation d'injection 61, par les dispositifs 10a, 10b, la cavité 23 du moule d'injection 20, la canalisation 62 de sortie de résine) par les moyens aptes à injecter du gaz dans la canalisation 64, le gaz sous pression arrive par la partie supérieure du té 11 mettant en pression la résine contenue dans la canalisation 13 de manière à transmettre la pression à la préforme 25. De ce fait, la résine contenue dans la canalisation 13 est poussée verticalement par le gaz sous pression en direction du moule d'injection 20. La position verticale de la canalisation 13 permet d'éviter une migration du gaz sous pression au travers de la résine ce qui provoquerait des porosités dans la pièce composite.

Le volume de la canalisation 13 est adapté au volume de la préforme 25 de manière à éviter que la canalisation 13 se vide en cas de remplissage résiduel de la préforme lors de l'étape de maintien en pression de la résine, provoquant des porosités dans la pièce composite.

Avantageusement, le diamètre D1 de la canalisation 13 est au minimum deux fois supérieur au diamètre D2 de la canalisation d'injection 61 (entrée de la résine dans le moule d'injection 20).

Le dispositif 10b est identique au dispositif 10a décrit précédemment. Le dispositif 10b diffère du dispositif 10a en ce que le té supérieur est relié à la partie de canalisation de sortie 62 de résine reliée au piège à résine 50 et ce que le té inférieur 12 est relié à la partie de la canalisation d'injection 62 reliée à la sortie du moule d'injection 20.

Ainsi, selon le mode de réalisation illustré à la figure 1, la mise en pression du réseau d'injection au niveau du point d'entrée de la résine dans le moule d'injection 20 et au niveau du point de sortie de la résine du moule d'injection 20 permet de réaliser un maintien en pression optimisé de la préforme jusqu'au démarrage de la polymérisation. Ce mode de réalisation permet d'éviter une éventuelle perte du maintien en pression du réseau d'injection par le démarrage de la polymérisation dans une partie du réseau d'injection (en amont ou en aval du moule d'injection 20).

Toutefois, il est également envisagé d'utiliser un seul dispositif de maintien en pression selon l'invention pour mettre en pression le système d'injection 100.

Les tés de raccord 11, 12 comportent des moyens permettant de connecter et de déconnecter rapidement les canalisations 61, 62, 64.

L'utilisation du dispositif de maintien en pression selon l'invention modifie quelques étapes du procédé d'injection RTM connu et décrit précédemment.

Ainsi, à la fin de l'étape d'injection de la résine dans le réseau d'injection, un temps de maintien en pression par l'injecteur doit être observé afin d'assurer le remplissage résiduel de la préforme 25. A l'issue du temps de maintien en pression par l'injecteur (variable en fonction du volume de la cavité 23et de la préforme 25), la mise sous pression du réseau est réalisée par l'injection du gaz sous pression dans le réseau via les canalisations de mise en pression 13.

Dès que la mise en pression du réseau d'injection est réalisée par les canalisations 13, l'injecteur 60 peut être déconnecté du réseau par la fermeture des vannes 63a, 63b et peut donc être nettoyé facilement puisque la résine n'a pas encore polymérisé. Ainsi, il est possible d'utiliser le même injecteur pour injecter de la résine dans un second système d'injection, parallèle au premier, alors que la polymérisation de la pièce du premier système n'est pas encore terminée.

De manière à retarder le figeage de la résine et permettre la transmission de la pression dans le moule d'injection le plus longtemps possible, le dispositif de maintien en pression 10 et/ou les canalisations 61, 62 du réseau d'injection sont entièrement calorifugés.

Ainsi dans le cas d'un chauffage en étuve, cela permettra à la résine d'éviter de polymériser dans les dispositifs de maintien en pression 10a, 10b et dans les parties des canalisations 61, 62 raccordés au moule d'injection lors de l'augmentation de la température.

Dans le cas d'une injection sous presse, cela permettra d'éviter la solidification ou l'épaississement de la résine par refroidissement au contact de l'air dans le dispositif 10 et dans les canalisations 61, 62.

Les autres avantages de l'invention sont notamment les suivants :
- mise en oeuvre rapide du dispositif de maintien sous pression selon l'invention ;
- coût de réalisation réduit ce qui permet d'utiliser une fonction de mise en pression pour la fabrication de pièce prototype.

## Revendications

1. Dispositif de maintien en pression (10a, 10b) pour un système d'injection de résine (100) comportant un réseau d'injection comportant une première canalisation (61), dite canalisation d'injection, reliée à un moule d'injection (20), **caractérisé en ce qu'**il comporte :
- des moyens de mise sous pression adaptés pour injecter un gaz sous pression dans une deuxième canalisation (64) ;
- un premier té de raccord (11) comportant une première entrée adaptée pour être reliée à ladite canalisation d'injection (61) de résine et une deuxième entrée adaptée pour être reliée à ladite deuxième canalisation (64) ;
- un deuxième té de raccord (12) comportant une sortie adaptée pour être reliée au dit moule d'injection (20) dudit système d'injection (100) via ladite canalisation d'injection (61), et un capteur de pression (14) ;
ledit premier té de raccord (11) étant raccordé au dit deuxième té de raccord (12) par une troisième canalisation, dite canalisation de maintien en pression (13), adaptée pour recevoir ledit gaz injecté sous pression, de sorte que le premier té de raccord (11) comporte une sortie reliée à ladite canalisation de maintien en pression (13) et que le deuxième té de raccord (12) comporte une entrée reliée à ladite canalisation de maintien en pression (13) ;
ledit premier té de raccord (11) et ledit deuxième té de raccord (12) étant positionnés sur la canalisation d'injection (61) en amont du moule d'injection et agencés de manière à ce que l'axe longitudinal de ladite canalisation de maintien en pression (13) soit orienté selon une direction verticale ;
ledit premier té de raccord (11) et ledit deuxième té de raccord (12) comportant des moyens pour connecter et déconnecter rapidement lesdites canalisations (61, 64, 13) raccordées.

2. Dispositif de maintien en pression (10a, 10b) pour un système d'injection de résine (100) selon la revendication précédente **caractérisé en ce que** le diamètre (D1) de ladite canalisation de maintien en pression (13) est au moins deux fois plus grande que le diamètre (D2) de ladite canalisation d'injection (61, 62) dudit réseau d'injection de résine.

3. Système d'injection de résine (100) apte à la réalisation de pièces en matériaux composites comportant :
- un injecteur (60) de résine ;
- un moule d'injection (20) comportant une cavité (23) apte à recevoir une préforme tissée (25) ;
- un réseau d'injection de résine formé par une canalisation d'entrée de résine (61) reliant l'injecteur (60) de résine et ledit moule d'injection (20) et une canalisation de sortie de résine (62) apte à évacuer le surplus de résine injecté dans ladite cavité (23) :
- un dispositif de maintien en pression (10a, 10b) selon l'une des revendications 1 à 2 ;
- des moyens (31) pour réaliser le vide dans ledit système d'injection (100) ;

4. Système d'injection de résine (100) selon la revendication 3 **caractérisé en ce que** ledit dispositif de maintien en pression (10a, 10b) est positionné au niveau de ladite canalisation d'entrée de résine (61) ou au niveau de ladite canalisation de sortie de résine (62) dudit moule d'injection (20).

5. Système d'injection de résine (100) selon l'une des revendications 3 à 4 **caractérisé en ce que** ledit système d'injection (100) comporte un premier dispositif de maintien en pression (10a) positionné au niveau de ladite canalisation d'entrée de résine (61) et un deuxième dispositif de maintien en pression (10b) positionné au niveau de ladite canalisation de sortie de résine (62).

6. Système d'injection de résine (100) selon l'une des revendications 3 à 5 **caractérisé en ce que** ledit dispositif de maintien en pression (10a, 10b) et/ou ladite canalisation d'entrée de résine (61) et/ou ladite canalisation de sortie de résine (62) sont calorifugés.

7. Procédé d'injection de résine par RTM mis en œuvre au moyen d'un système d'injection selon l'une des revendications 3 à 6 **caractérisé en ce que** ledit procédé comporte les étapes consistant à :
- faire le vide dans ledit réseau d'injection de résine formé au moins par ladite canalisation d'entrée de résine (61), ladite canalisation de sortie de résine (62), ladite cavité (23) dudit moule d'injection (20), via lesdits moyens (31) aptes à réaliser le vide dans le système d'injection (100) ;
- injecter la résine à l'état liquide dans le réseau d'injection au moyen dudit injecteur (60) de manière à atteindre une pression consigne à l'intérieur dudit moule d'injection (20) :
- appliquer une pression de maintien dans le réseau d'injection au moyen dudit dispositif de maintien en pression (10a, 10b) jusqu'à la polymérisation de ladite résine.

## Patentansprüche

1. Druckhaltevorrichtung (10a, 10b) für ein Einspritzsystem von Harz (100), aufweisend ein Einspritznetzwerk, aufweisend eine erste Kanalisation (61), bezeichnet als Einspritzkanalisation, verbunden mit einer Einspritzform (20), **dadurch gekennzeichnet, dass** sie aufweist:
- Unterdrucksetzungsmittel, die ausgebildet sind, um ein Gas unter Druck in eine zweite Kanalisation (64) einzuleiten,
- einen ersten T-Anschluss (11), der ausgebildet ist, um mit der Einspritzkanalisation (61) von Harz verbunden zu sein, und einen zweiten Eingang, derausgebildet ist, um mit der zweiten Kanalisation (64) verbunden zu sein,
- einen zweiten T-Anschluss (12), aufweiswend einen Ausgang, derausgebildet ist, um mit der Einspritzform (20) des Einspritzsystems (100) über die Einspritzkanalisation (61) und einen Drucksensor (14) verbunden zu sein,
wobei der erste T-Anschluss (11) an den zweiten T-Anschluss (12) mit Hilfe einer dritten Kanalisation, bezeichnet als Druckhaltekanalisation (13), angeschlossen ist, der ausgebildet ist, um das unter Druck eingeleitete Gas derart aufzunehmen, dass der erste T-Anschluss (11) einen Ausgang aufweist, der an der Druckhaltekanalisation (13) verbunden ist, und dass der zweite T-Anschluss (12) einen Eingang aufweist, der mit der Druckhaltekanalisation (13) verbunden ist;
wobei der erste T-Anschluss (11) und der zweite T-Anschluss (12) auf der Einspritzkanalisation (61) vor der Einspritzform derart angeordnet und derart ausgebildet sind, dass die Längsachse dieser Druckhaltekanalisation (13) gemäß einer vertikalen Richtung ausgerichtet ist,
wobei der erste T-Anschluss (11) und der zweite T-Anschluss (12) Mittel zum raschen Anschließen und Abhängen der genannten angeschlossenen Kanalisationen (61, 64, 13) umfasst.

2. Druckhaltevorrichtung (10a, 10b) für ein Einspritzsystem von Harz (100) nach vorangehendem Anspruch, **dadurch gekennzeichnet, dass** der Durchmesser (D1) der Druckhaltekanalisation (13) mindestens zweimal größer ist als der Durchmesser (D2) der Einspritzkanalisation (61, 62) des Einspritznetzwerks von Harz.

3. Einspritzsystem von Harz (100), das imstande ist, Teile aus Verbundmaterial herzustellen, aufweisend:
- eine Harzeinspritzung (60),
- eine Einspritzform (20), aufweisend einen Hohlraum (23), der imstande ist, eine gewebte Vorform (25) aufzunehmen,
- ein Einspritznetzwerk von Harz, gebildet von einer Harzeinleitungskanalisation (61), welche die Harzeinspritzung (60) und die Einspritzform (20) verbindet, und eine Harzausleitungskanalisation (62), die imstande ist, das überschüssige, in den Hohlraum (23) eingespritzte Harz abzuleiten,
- eine Druckhaltevorrichtung (10a, 10b) nach einem der Ansprüche 1 bis 2,
- Mittel (31) zur Herstellung des Vakuums in dem Einspritzsystem (100).

4. Einspritzsystem von Harz (100) nach Anspruch 3, **dadurch gekennzeichnet, dass** die Druckhaltevorrichtung (10a, 10b) im Bereich der Harzeinleitungskanalisation (61) oder im Bereich der Harzausleitungskanalisation (62) der Einspritzform (20) positioniert ist.

5. Einspritzsystem von Harz (100) nach einem der Ansprüche 3 bis 4, **dadurch gekennzeichnet, dass** das Einspritzsystem (100) eine erste Druckhaltevorrichtung (10a) aufweist, die im Bereich der Harzeinleitungskanalisation (61) positioniert ist, und eine zweite Druckhaltevorrichtung (10b), die im Bereich der Harzausleitungskanalisation (62) positioniert ist.

6. Einspritzsystem von Harz (100) nach einem der Ansprüche 3 bis 5, **dadurch gekennzeichnet, dass** die Druckhaltevorrichtung (10a, 10b) und/oder die Harzeinleitungskanalisation (61) und/oder die Harzausleitungskanalisation (62) wärmeisoliert sind.

7. Verfahren für das Einspritzen von Harz mittels RTM, umgesetzt mit Hilfe eines Einspritzsystems nach einem der Ansprüche 3 bis 6, **dadurch gekennzeichnet, dass** das Verfahren die folgenden Schritte umfasst:
- Herstellung von Vakuum im Einspritznetzwerk von Harz, gebildet von mindestens der Harzeinleitungskanalisation (61), der Harzausleitungskanalisation (62), dem Hohlraum (23) der Einspritzform (20), über die Mittel (31), die imstande sind, das Vakuum in dem Einspritzsystem (100) herzustellen,
- Einspritzen des Harzes in flüssigem Zustand in das Einspritznetzwerk mit Hilfe der Einspritzung (60), so dass ein Solldruck in der Einspritzform (20) erreicht wird,
- Anwendung eines Haltedrucks in dem Einspritznetzwerk mit Hilfe der Druckhaltevorrichtung (10a, 10b) bis zur Polymerisierung des Harzes.

## Claims

1. A pressure holding device (10a, 10b) for a resin injection system (100) including an injection network connected comprising a first piping (61), said piping injection, linked to an injection mould (20) **characterised in that** it includes:
- pressurising means adapted to inject a pressurised gas into a second piping (64) ;
- a first connecting T (11) comprising a first inlet adapted to be connected to said resin piping injection (61) and a second inlet adapted to be connected to said second piping (64);
- a second connecting T (12) comprising an outlet adapted to be connected to said injection mould (20) of said injection system (100) via said piping injection (61), and a pressure sensor (14);
said first connecting T (11) being connected to said second connecting T (12) by a third piping, said pressure holding piping (13) adapted to receive said pressurised injected gas, in such that the first connecting T (11) comprises an outlet linked to said pressure holding piping (13) and that the second connecting T (12) comprises an inlet linked to said pressure holding piping (13);
said first connecting T (11) and said second connecting T (12) being sit on the piping injection (61) upstream of the injection mould and arranged such that the longitudinal axis of said pressure holding piping (13) is oriented along a vertical direction;
said first connecting T (11) and said second connecting T comprising connecting means to quickly connect and disconnect piping (61, 64, 13).

2. The pressure holding device (10a, 10b) for a resin injection system (100) according to the preceding claim, **characterised in that** the diameter (D1) of said pressure holding piping (13) is at least twice as large as the diameter (D2) of said piping injection (61, 62) of said resin injection network.

3. A resin injection system (100) able to make pieces of composite materials including:
- a resin injector (60);
- an injection mould (20) including a cavity (23) able to receive a woven preform (25);
- a resin injection network formed by a resin inlet piping (61) connecting the resin injector (50) and said injection mould (20) and a resin outlet piping (62) able to discharge extra resin injected in said cavity (23);
- a pressure holding device (10a, 10b) according to one of claims 1 to 2;
- means (31) for drawing vacuum in said injection system (100).

4. The resin injection system (100) according to claim 3, **characterised in that** said pressure holding device (10a, 10b) is positioned at said resin inlet piping (61) or at said resin outlet piping (62) of said injection mould (20).

5. The resin injection system (100) according to one of claims 3 to 4, **characterised in that** said injection system (100) includes a first pressure holding device (10a) positioned at said resin inlet piping (61) and a second pressure holding device (10b) positioned at said resin outlet piping (62).

6. The resin injection system (100) according to one of claims 3 to 5, **characterised in that** said pressure holding device (10b) and/or said resin inlet piping (61) and/or said resin outlet piping (62) are heat insulated.

7. A method for injecting resin by RTM implemented by means of an injection system according to one of claims 3 to 6, **characterised in that** said method includes the following steps of:
- drawing vacuum in said resin injection network formed at least by said resin inlet piping (61), said resin outlet piping (62), said cavity (23) of said injection mould (20), via said means (31) able to draw vacuum in the injection system (100);
- Injecting the liquid-state resin into the injection network by means of said injector (60) so as to reach a set point pressure inside said injection mould (20);
- applying a holding pressure in the injection network by means of said pressure holding device (10a, 10b) until said resin is polymerised.
